# EUROPEAN PATENT APPLICATION

(11) **EP 4 752 864 A1**
(43) Date of publication of application: **03.06.2026**
(21) Application number: 24845471.2
(22) Date of filing: 16.07.2024
(51) Int. Cl.: G09B 9/058, G06Q 50/10, G09B 9/042, G09B 19/00

(54) **MOTION MEASUREMENT DEVICE, MOTION MEASUREMENT METHOD, AND MOTION MEASUREMENT PROGRAM**

(30) Priority: 25.07.2023 JP 2023120490
(71) Applicant: Vitamin I Factory Co., Ltd., Tokyo 154-0013 (JP)
(72) Inventor: WATANABE, Mikio, Tokyo 154-0013 (JP)
(74) Representative: Alpspitz IP
(86) International application number: PCT/JP2024/025441
(87) International publication number: WO 2025/023090

(57) **Abstract**

This motion measurement device 10 comprises: a speed measurement unit 14 that acquires the travel distance and the travel time of a travel body and measures the speed of the travel body; an inclination angle measurement unit 15 that measures an inclination angle inclined in the lateral direction with respect to the travel direction in which the travel body travels; and a display unit 16 that displays the relationship between the speed of the travel body and the inclination angle of the travel body in different display modes in accordance with the speed of the travel body or the inclination angle of the travel body.

## Description

### [Technical Field]

The present invention relates to MOTION MEASUREMENT DEVICE, MOTION MEASUREMENT METHOD, AND MOTION MEASUREMENT PROGRAM for measuring a traveling state of a traveling body.

### [Background Art]

Conventionally, for example, when a child or the like rides a bicycle for the first time, practice is performed in which the child rides a kick bike to which a chain and a pedal unit are not attached, and practices moving the kick bike forward by kicking the ground with legs to acquire handlebar operation skills and a sense of balance. Thereafter, depending on the degree of mastery, a chain and a pedal unit are attached, and the practice shifts to bicycle practice. At this time, if the exercise status of the kick bike or bicycle during traveling may be measured and visually confirmed, points for improvement become clear, and it becomes possible to promote improvement in traveling skills.

Here, identifying various movements of a measurement subject on a bicycle or the like has been proposed. For example, Patent Document 1 discloses a motion measurement device characterized by comprising: detection means for detecting a rotational movement of the measurement subject around a body axis; first specifying means for specifying a rotation cycle of a pedal in bicycle traveling of the measurement subject from the rotational movement detected by the detection means; and first calculation means for calculating an activity amount in the bicycle traveling based on the rotation cycle specified by the first specifying means.

### [Citation List]

### [Patent Literature]

**[Patent Document 1]** JP 2016-179718 A

### [Summary of Invention]

### [Technical Problem]

However, with the technology of Patent Document 1, although the activity amount of the bicycle may be measured, measuring information for improving driving skills of a rider is not considered, so that further improvement in technology is desired. In particular, it is difficult for a parent to teach a child how to ride a bicycle, and a device that enables this has not been disclosed. Therefore, it is difficult for a child to improve at cycling, and they often come to dislike bicycles.

Therefore, the present invention has been made in view of the above problems, and it is a main object to provide a motion measurement device capable of promoting improvement in traveling skills of a driving beginner or the like.

### [Solution to Problem]

In order to solve the above problems, a motion measurement device according to the present invention comprises: a speed measuring unit configured to acquire a travel distance and a travel time of a traveling body to measure a speed of the traveling body; a tilt angle measuring unit configured to measure a tilt angle of the traveling body tilted in a left-right direction with respect to a traveling direction of the traveling body; and a display unit configured to display a relationship between the speed of the traveling body and the tilt angle of the traveling body in a display mode that differs depending on the speed of the traveling body or the tilt angle of the traveling body.

In addition, a motion measurement method according to the present invention includes: a step of acquiring a travel distance and a travel time of a traveling body and measuring a speed of the traveling body; a step of measuring a tilt angle of the traveling body tilted in a left-right direction with respect to a traveling direction of the traveling body; and a step of displaying a relationship between the speed of the traveling body and the tilt angle of the traveling body in a display mode that differs depending on the speed of the traveling body or the tilt angle of the traveling body.

Furthermore, a program for causing execution of the motion measurement method according to the present invention causes a computer to execute: a step of acquiring a travel distance and a travel time of a traveling body to measure a speed of the traveling body; a step of measuring a tilt angle of the traveling body tilted in a left-right direction with respect to a traveling direction of the traveling body; and a step of displaying a relationship between the speed of the traveling body and the tilt angle of the traveling body in a display mode that differs depending on the speed of the traveling body or the tilt angle of the traveling body.

### [Effect of Invention]

According to the motion measurement device according to the present invention, it becomes possible to promote improvement in traveling skills of a driving beginner or the like. Note that the effects described herein are not necessarily limited, and may be any of the effects described in the present specification. Note that the effects described herein are not necessarily limited, and may be any of the effects described in the present specification.

### [Brief Description of Drawings]

FIG. 1 is a schematic configuration diagram showing an exercise measuring system according to a first embodiment of the present invention.
FIG. 2 is a functional block diagram showing a functional configuration within a motion measurement device according to the first embodiment of the present invention.
FIG. 3 is a flowchart showing a flow of a bicycle traveling mode by a motion measurement method according to the first embodiment of the present invention.
FIG. 4 is a flowchart showing a flow of an exercise measuring mode by the motion measurement method according to the first embodiment of the present invention.
FIG. 5 is a flowchart showing a flow of a level evolution mode by the motion measurement method according to the first embodiment of the present invention.
FIG. 6 is a schematic diagram showing an example of a display screen by a display unit of the motion measurement device according to the first embodiment of the present invention.
FIG. 7 is a schematic diagram showing an example of a display screen by the display unit of the motion measurement device according to the first embodiment of the present invention.
FIG. 8 is a flowchart showing a flow of processing for determining a monitoring person for each day of the week by a motion measurement method according to a second embodiment of the present invention.
FIG. 9 is a flowchart showing a flow of processing for proposing a play location by a motion measurement method according to a third embodiment of the present invention.
FIG. 10 is a flowchart showing a flow of processing for providing a summary of bicycle traveling by a motion measurement method according to a fourth embodiment of the present invention.
FIG. 11 is a flowchart showing a flow of processing for darkening or lightening a display screen by a motion measurement method according to a fifth embodiment of the present invention.
FIG. 12 is a flowchart showing a flow of processing for acquiring position information by a motion measurement method according to a sixth embodiment of the present invention.
Fig. 13 is a flowchart showing a flow of processing for proposing a traveling method by a motion measurement method according to a seventh embodiment of the present invention.

### [Description of Embodiments]

Hereinafter, preferred embodiments for carrying out the present invention will be described with reference to the drawings. Note that the embodiments described below show an example of a representative embodiment of the present invention, and the scope of the present invention is not limited thereby, and various combinations, modifications, and changes are possible within the scope of the gist thereof.

### <First Embodiment>

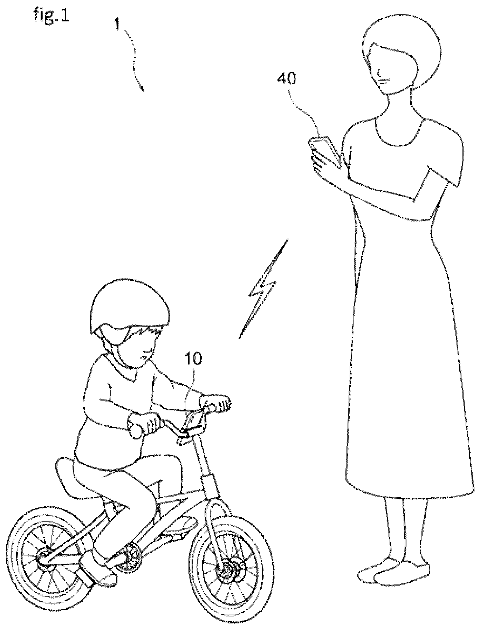

A first embodiment of the present invention will be described with reference to FIG. 1 to FIG. 7.

### <1. Configuration of Exercise Measuring System>

First, an exercise measuring system 1 according to the first embodiment of the present invention will be described with reference to FIG. 1. FIG. 1 is a schematic configuration diagram showing the exercise measuring system 1 according to the present embodiment.

As shown in FIG. 1, the exercise measuring system 1 includes a first motion measurement device 10 and a second motion measurement device 40. The first motion measurement device 10 and the second motion measurement device 40 are connected to be communicable with each other via a network such as the Internet. Note that the type and form of the network line does not matter.

The first motion measurement device 10 is an electronic device such as a mobile terminal, for example, a smartphone for a child or a tablet terminal acting as a parent device, which may be attached to a practice bicycle for a child or the like. The second motion measurement device 40 is an electronic device such as a mobile terminal, for example, a smartphone for a guardian or a tablet terminal, a notebook computer, or a desktop computer acting as a child device, which is used by a guardian of the child or the like.

The first motion measurement device 10 and the second motion measurement device 40 each have a display unit. These display units are interfaces for displaying various types of information from the first motion measurement device 10 and the second motion measurement device 40 to a user, and are, for example, video display means such as a liquid crystal display. Specifically, the display units of the first motion measurement device 10 and the second motion measurement device 40 may display a GUI (Graphical User Interface) for accepting operations from the user.

### <2. Configuration of Motion measurement device>

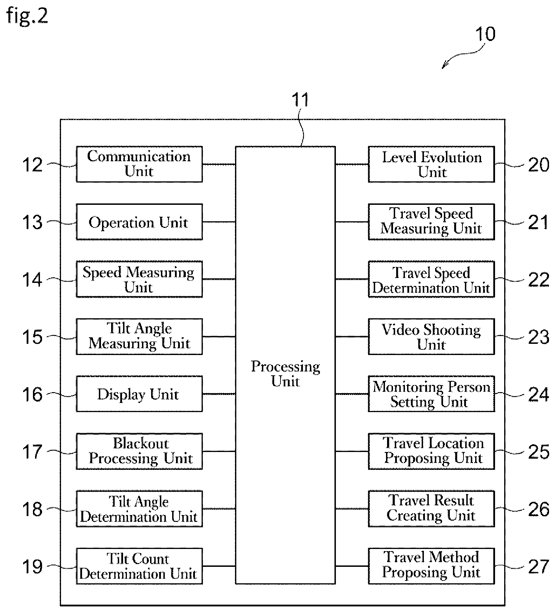

Next, the motion measurement device according to the present embodiment will be described with reference to FIG. 2. Since the functional configurations of the first motion measurement device 10 and the second motion measurement device 40 are similar, the functional configuration of the first motion measurement device 10 will be described as an example. FIG. 2 is a functional block diagram showing a functional configuration within the motion measurement device 10 according to the present embodiment.

As shown in FIG. 2, the first motion measurement device 10 includes a processing unit 11, a communication unit 12, an operation unit 13, a speed measuring unit 14, a tilt angle measuring unit 15, and a display unit 16.

The processing unit 11 is configured by, for example, a CPU (Central Processing Unit), a DSP (Digital Signal Processor), an ASIC (Application Specific Integrated Circuit), or the like. The processing unit 11 operates according to various programs such as a motion measurement program stored in a storage unit within the first motion measurement device 10, and various commands input by the user via the operation unit 13.

The communication unit 12 is configured to include, for example, a transceiver or the like compatible with short-range wireless communication standards such as Wi-Fi (registered trademark) (Wireless Fidelity), LTE/5G, Cat.M1, and NB-IoT.

The operation unit 13 converts the content of a command input by the user into an appropriate signal and provides the signal to the processing unit 11. The operation unit 13 is realized by, for example, a button, a key, a microphone, a touch panel, or the like.

The speed measuring unit 14 acquires a travel distance and a travel time of a traveling body and measures a speed of the traveling body. For example, the speed measuring unit 14 acquires, by a speed sensor or the like, a travel distance traveled by a practice bicycle for a child, which is an example of the traveling body, and a travel time traveled by the practice bicycle, measures the speed of the practice bicycle, and acquires data thereof.

The tilt angle measuring unit 15 measures a tilt angle of the traveling body tilted in a left-right direction with respect to a traveling direction in which the traveling body travels. For example, the tilt angle measuring unit 15 measures, by a tilt angle sensor or the like, a tilt angle tilted to either one or both of the left and right with respect to the traveling direction in which the practice bicycle for a child travels, and acquires data thereof.

The display unit 16 displays image data, text data, and the like sent from the processing unit 11 as characters, graphs, tables, animations, and other images. The display unit 16 is realized by a display such as, for example, an LCD (Liquid Crystal Display), an organic EL (Electroluminescence) display, or an EPD (Electrophoretic Display). Note that the display unit 16 may also be configured with a touch panel type display. In that case, at least a part of the functions of the operation unit 13 may be included on the display unit 16 side.

The display unit 16 displays a relationship between the speed of the traveling body and the tilt angle of the traveling body in a display mode that differs depending on the speed of the traveling body or the tilt angle of the traveling body. The different display mode may display one of the speed of the traveling body and the tilt angle of the traveling body as a line graph, and display the other as a color or a shade of the line graph. For example, the tilt angle of the traveling body is displayed as a line graph, and the speed of the traveling body is displayed as a color or a shade of the line graph to display the relationship between the speed of the traveling body and the tilt angle of the traveling body.

In addition, the first motion measurement device 10 includes a blackout processing unit 17, a tilt angle determination unit 18, a tilt count determination unit 19, a level evolution unit 20, a travel speed measuring unit 21, and a travel speed determination unit 22.

The blackout processing unit 17 may darken the screen of the display unit 16 when the traveling body reaches a predetermined speed, or may lighten the screen from the darkened state when the traveling body has stopped for a certain time or more. For example, when the speed of the practice bicycle driven by the child reaches 3 km/h, the blackout processing unit 17 darkens the screen of the display unit 16 of the first motion measurement device 10, which is a smartphone for a child used by the child. By doing so, it is possible to prevent the child from losing concentration or becoming unable to hear what the parent is saying due to looking at the screen while riding the bicycle, thereby enhancing safety. Also, the blackout processing unit 17 may allow sound to be emitted even when the screen of the display unit 16 is darkened. For example, by making a call or pressing a voice button on the second motion measurement device 40, which is a smartphone for a guardian, a voice such as "Come back" may be generated remotely from the first motion measurement device 10. Furthermore, the blackout processing unit 17 of the second motion measurement device 40 may also remotely operate the first motion measurement device 10 to darken the screen of the display unit 16.

The tilt angle determination unit 18 determines that the traveling body has tilted at a predetermined angle in one direction (for example, the left direction) of the left-right direction, and determines that the traveling body has tilted at a predetermined angle in the other direction (for example, the right direction) opposite to the one direction within a certain time after tilting in the one direction.

The tilt count determination unit 19 determines that the number of times the traveling body has tilted in the one direction or the other direction of the left-right direction is equal to or less than a threshold. For example, the tilt count determination unit 19 determines that the number of times the practice bicycle has tilted in the one direction or the other direction of the left-right direction is six times or less. The number of times tilted may be once or a plurality of times of twice or more, and the number of times is not limited. Further, the tilt count determination unit 19 may determine how many times tilting occurred within a predetermined time (for example, 10 seconds) or how many times tilting occurred before advancing a predetermined distance (for example, 100 m).

The level evolution unit 20 advances a driving level of the traveling body by one step when it is determined that the number of times the traveling body has tilted in the one direction or the other direction of the left-right direction is equal to or less than the threshold. Also, the level evolution unit 20 advances the driving level of the traveling body by one step when it is determined that the speed of the traveling body has become zero within a certain time. By evolving in this way, the child becomes able to practice actively through the guidance of the device, and may continue practicing without getting bored. While there are difficulties such as the child not listening readily when a parent teaches bicycle riding, motivation may be given to the child through the evolution of the character in this way.

The travel speed measuring unit 21 measures a travel speed when the traveling body is traveling. The travel speed measuring unit 21 may also measure acceleration when the traveling body is traveling. The travel speed measuring unit 21 may measure whether speed is gained while the traveling body is traveling on a straight line, or whether speed is gained while traveling on a clockwise or counter-clockwise curve.

The travel speed determination unit 22 determines that the travel speed of the traveling body is equal to or higher than a predetermined speed, and determines that the speed of the traveling body has become zero within a certain time when the traveling body is traveling at the predetermined speed or higher. The travel speed determination unit 22 determines, for example, that the speed of the traveling body has become zero within one second after reaching 10 km/h.

Furthermore, the first motion measurement device 10 includes a video shooting unit 23, a monitoring person setting unit 24, a travel location proposing unit 25, a travel result creating unit 26, and a travel method proposing unit 27.

The video shooting unit 23 starts video shooting of a rider of the traveling body together with a start signal or automatically when measuring the speed of the traveling body.
The video shooting unit 23 may video-shoot, for example, a facial expression or the like of a child during exercise measurement. Generally, since it is difficult for a parent to record a moment when a child rides a bicycle for the first time on video, by doing so, it is possible to record the moment when the child rides the bicycle on video without missing it.

The monitoring person setting unit 24 sets a monitoring person for the rider of the traveling body according to a day of the week. For example, the monitoring person setting unit 24 may set the monitoring person for the child who is the rider of the traveling body to a mother on weekdays (Monday to Friday), and to a father on Saturday and Sunday.

The travel location proposing unit 25 proposes a location to travel based on a location traveled in the past by the traveling body, a traveled date, a distance from a current location, and an age of the rider driving the traveling body. Further, the travel location proposing unit 25 may compare information of the rider of the traveling body with information of an age of another person driving another traveling body, a travel location, a travel date, and a distance from a current location recorded in a database via a network, and propose a location to travel based on information highly approximate to the information of the rider.

The travel result creating unit 26 creates a travel result of a day traveled by the traveling body. The travel result creating unit 26 may cause the display unit 16 to display the created travel result.

The travel method proposing unit 27 proposes a travel method of the traveling body according to a degree of evolution of a driving level of the rider of the traveling body (for example, evolution level 0 to evolution level 5, etc.).

### <3. Flow of Bicycle Traveling Mode>

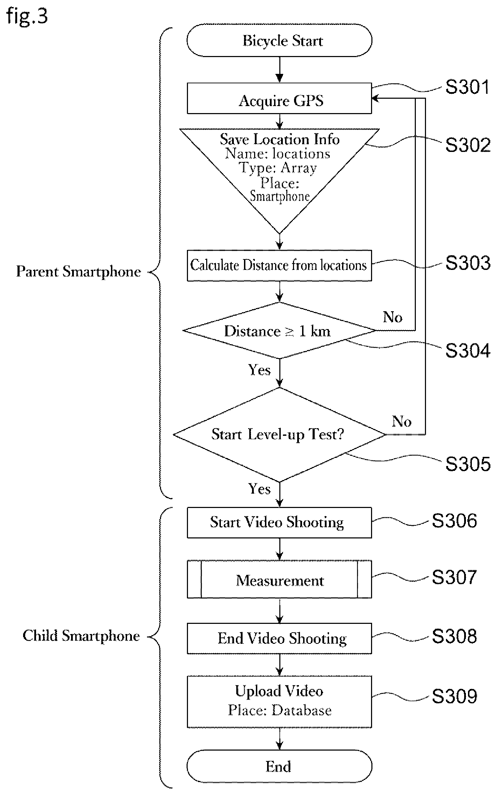

Next, a flow of processing of a bicycle traveling mode by the motion measurement method using the exercise measuring system 1 according to the present embodiment will be described with reference to FIG. 3. FIG. 3 is a flowchart showing the flow of the bicycle traveling mode by the motion measurement method according to the present embodiment.

The processing of the bicycle traveling mode is started by, for example, mounting the smartphone for a child (parent device), which is the first motion measurement device 10, on a practice bicycle, and performing a start operation of the bicycle traveling mode on the smartphone for a guardian (child device), which is the second motion measurement device 40.

As shown in FIG. 3, in step S301, the second motion measurement device 40 acquires position information of a current location using a GPS (Global Positioning System) function.

In step S302, the second motion measurement device 40 stores the acquired position information in a storage unit such as a database with, for example, a name "locations" and a type "Array".

In step S303, the processing unit 11 of the second motion measurement device 40 calculates a travel distance traveled by the child on the practice bicycle from the acquired position information.

In step S304, the processing unit 11 of the second motion measurement device 40 determines whether or not the calculated travel distance is, for example, 1 km or more. If "Yes" for 1 km or more, the process proceeds to step S305. If "No" for less than 1 km, the process returns to step S301.

In step S305, a guardian or the like who is an operator of the second motion measurement device 40 selects whether or not to start a level-up test of driving skills for the practice bicycle. If "Yes" to start, the process proceeds to step S306. If "No" to not start, the process returns to step S301.

In step S306, upon receiving a command to start the level-up test, the video shooting unit 23 of the first motion measurement device 10 starts video shooting of the child driving the practice bicycle.

In step S307, the first motion measurement device 10 starts an exercise measuring mode of the practice bicycle for the level-up test.

In step S308, when the exercise measuring mode of the practice bicycle ends, the video shooting unit 23 of the first motion measurement device 10 ends the video shooting of the child driving the practice bicycle.

In step S309, the first motion measurement device 10 saves the shot video in a storage unit such as a database, and ends the processing of the bicycle traveling mode.

### <4. Flow of Exercise Measuring Mode>

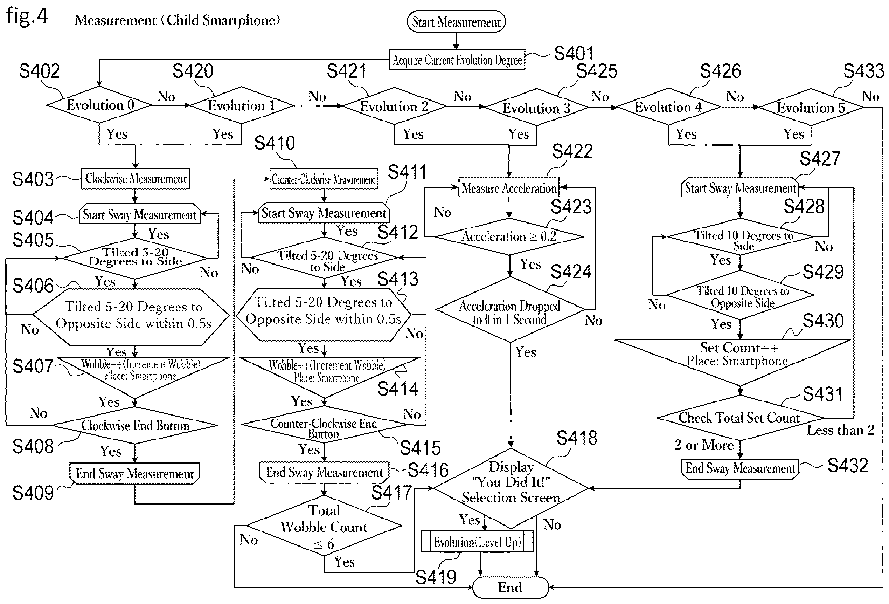

Next, a flow of exercise measuring processing by the motion measurement method using the first motion measurement device 10 according to the present embodiment will be described with reference to FIG. 4. FIG. 4 is a flowchart showing a flow of an exercise measuring mode by the motion measurement method according to the present embodiment.

The exercise measuring mode is processing for determining whether or not to advance a level of proficiency of a rider by performing a level-up test of driving skills for the practice bicycle.

As shown in FIG. 4, in step S401, the processing unit 11 of the first motion measurement device 10 acquires a current degree of evolution of the rider of the practice bicycle.

In step S402, the level evolution unit 20 of the first motion measurement device 10 determines whether or not the current degree of evolution of the rider of the practice bicycle is evolution level 0. If "Yes" where the degree of evolution is evolution level 0, the process proceeds to step S403. If "No" where the degree of evolution is not evolution level 0, the process proceeds to step S420.

In step S403, the first motion measurement device 10 first starts exercise measurement of the practice bicycle during clockwise traveling.

In step S404, the tilt angle measuring unit 15 of the first motion measurement device 10 starts measurement of swaying (tilt angle) of the practice bicycle during clockwise traveling.

In step S405, the tilt angle determination unit 18 of the first motion measurement device 10 determines whether or not the measured tilt angle is within a range of a predetermined angle (for example, 5 degrees to 20 degrees) in one direction of the left-right direction. If "Yes" where the tilt angle is within the range of the predetermined angle, the process proceeds to step S406. If "No" where the tilt angle is not within the range of the predetermined angle, the process returns to step S404.

In step S406, the tilt angle determination unit 18 determines whether or not tilting occurred at a predetermined angle in the other direction on the opposite side within 0.5 seconds after tilting at a predetermined angle (for example, 5 degrees to 20 degrees) in the one direction. If "Yes" where tilting occurred at the predetermined angle within 0.5 seconds, the process proceeds to step S407. If "No" where tilting did not occur at the predetermined angle within 0.5 seconds, the process returns to step S405.

In step S407, the storage unit of the first motion measurement device 10 stores the number of times tilting occurred at the predetermined angle during clockwise traveling.

In step S408, the operator of the first motion measurement device 10 selects whether or not to end the measurement of swaying of the practice bicycle during clockwise traveling. If "Yes" to end, the process proceeds to step S409. If "No" to not end, the process returns to step S405.

In step S409, the first motion measurement device 10 ends the measurement of swaying of the practice bicycle during clockwise traveling.

In step S410, the first motion measurement device 10 next starts exercise measurement of the practice bicycle during counter-clockwise traveling.

In step S411, the tilt angle measuring unit 15 starts measurement of swaying (tilt angle) of the practice bicycle during counter-clockwise traveling.

In step S412, the tilt angle determination unit 18 determines whether or not the measured tilt angle is within a range of a predetermined angle (for example, 5 degrees to 20 degrees) in one direction of the left-right direction. If "Yes" where the tilt angle is within the range of the predetermined angle, the process proceeds to step S413. If "No" where the tilt angle is not within the range of the predetermined angle, the process returns to step S411.

In step S413, the tilt angle determination unit 18 determines whether or not tilting occurred within a range of a predetermined angle (for example, 5 degrees to 20 degrees) in the other direction on the opposite side within 0.5 seconds after tilting at a predetermined angle in the one direction. If "Yes" where tilting occurred at the predetermined angle within 0.5 seconds, the process proceeds to step S414. If "No" where tilting did not occur at the predetermined angle within 0.5 seconds, the process returns to step S412.

In step S414, the storage unit of the first motion measurement device 10 stores the number of times tilting occurred at a predetermined angle during counter-clockwise traveling.

In step S415, the operator of the first motion measurement device 10 selects whether or not to end the measurement of swaying of the practice bicycle during counter-clockwise traveling. If "Yes" to end, the process proceeds to step S416. If "No" to not end, the process returns to step S412.

In step S416, the first motion measurement device 10 ends the measurement of swaying of the practice bicycle during counter-clockwise traveling.

In step S417, the tilt count determination unit 19 of the first motion measurement device 10 determines whether or not the number of times of swaying (wobbling) in one direction or the other direction of the left-right direction during traveling of the practice bicycle is equal to or less than a predetermined number of times (for example, 6 times) within a predetermined time or within a range of a predetermined distance. If "Yes" where the number of times is equal to or less than the predetermined number of times, the process proceeds to step S418. If "No" where the number of times exceeds the predetermined number of times, the processing of the exercise measuring mode is ended.

In step S418, after passing the performed level-up test, the operator of the first motion measurement device 10 selects whether or not to display a "You did it!" selection screen on the display unit 16. If "Yes" to display, the process proceeds to step S419. If "No" to not display, the processing of the exercise measuring mode is ended.

In step S419, the level evolution unit 20 of the first motion measurement device 10 performs processing of the level evolution mode, and ends the processing of the exercise measuring mode.

In step S420, the level evolution unit 20 determines whether or not the current degree of evolution of the rider of the practice bicycle is evolution level 1. If "Yes" where the degree of evolution is evolution level 1, the process proceeds to step S403, and the same processing as in the case of evolution level 0 is performed. If "No" where the degree of evolution is not evolution level 1, the process proceeds to step S421.

In step S421, the level evolution unit 20 determines whether or not the current degree of evolution of the rider of the practice bicycle is evolution level 2. If "Yes" where the degree of evolution is evolution level 2, the process proceeds to step S422. If "No" where the degree of evolution is not evolution level 2, the process proceeds to step S425.

In step S422, the travel speed measuring unit 21 of the first motion measurement device 10 measures a speed or acceleration during traveling of the practice bicycle. Note that the travel speed measuring unit 21 measures whether speed is gained while the traveling body is traveling on a straight line, or whether speed is gained while traveling on a clockwise or counter-clockwise curve, and if a predetermined speed is gained, the driving level may be evolved. For example, the driving level may be evolved as beginner if speed is gained during straight traveling, as intermediate if speed is gained during traveling on either a clockwise or counter-clockwise curve, and as advanced if speed is gained during traveling on both clockwise and counter-clockwise curves.

In step S423, the travel speed determination unit 22 of the first motion measurement device 10 determines whether or not the acceleration during traveling is equal to or higher than a predetermined numerical value (for example, 0.2 km/s2). If "Yes" where it is equal to or higher than the predetermined numerical value, the process proceeds to step S424. If "No" where it is less than the predetermined numerical value, the process returns to step S422.

In step S424, the travel speed determination unit 22 gives a signal to apply a brake by voice or the like to the rider of the practice bicycle, and determines whether or not the acceleration has dropped to 0 within one second after the rider receiving the signal applied the brake. If "Yes" where it dropped, the process proceeds to step S418. If "No" where it did not drop, the process returns to step S422.

In step S425, the level evolution unit 20 determines whether or not the current degree of evolution of the rider of the practice bicycle is evolution level 3. If "Yes" where the degree of evolution is evolution level 3, the process proceeds to step S422, and the same processing as in the case of evolution level 2 is performed. If "No" where the degree of evolution is not evolution level 3, the process proceeds to step S426.

In step S426, the level evolution unit 20 determines whether or not the current degree of evolution of the rider of the practice bicycle is evolution level 4. If "Yes" where the degree of evolution is evolution level 4, the process proceeds to step S427. If "No" where the degree of evolution is not evolution level 4, the process proceeds to step S433.

In step S427, the tilt angle measuring unit 15 starts measurement of an angle (tilt angle) at which the rider swayed the practice bicycle in the left-right direction during traveling.

In step S428, the tilt angle determination unit 18 determines whether or not the measured tilt angle is equal to or larger than a predetermined angle (for example, 10 degrees) in one direction of the left-right direction. If "Yes" where the tilt angle is equal to or larger than the predetermined angle, the process proceeds to step S429. If "No" where the tilt angle is less than the predetermined angle, the process returns to step S427.

In step S429, the tilt angle determination unit 18 determines whether or not tilting occurred at a predetermined angle (for example, 10 degrees) or more in the other direction on the opposite side after tilting at a predetermined angle or more in the one direction. If "Yes" where the tilt angle is equal to or larger than the predetermined angle, the process proceeds to step S430. If "No" where the tilt angle is less than the predetermined angle, the process returns to step S428.

In step S430, the storage unit of the first motion measurement device 10 stores the number of sets of how many times swaying occurred at a predetermined angle or more in one direction or the other direction of the left-right direction, and transmits the number of sets to the tilt count determination unit 19.

In step S431, the tilt count determination unit 19 determines whether or not the received number of sets is equal to or larger than a predetermined number of times (for example, 2 sets) within a predetermined time or within a range of a predetermined distance. If "Yes" where it is equal to or larger than the predetermined number of times, the process proceeds to step S432. If "No" where it is less than the predetermined number of times, the process returns to step S427.

In step S432, the first motion measurement device 10 ends the measurement of the angle (tilt angle) at which the rider swayed the practice bicycle in the left-right direction during traveling, and proceeds to step S418.

### <5. Flow of Level Evolution Mode>

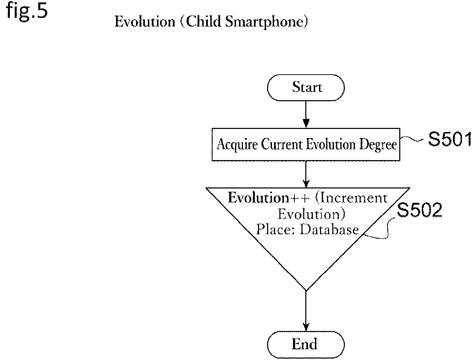

Next, a flow of processing of a level evolution mode by the motion measurement method using the exercise measuring system 1 according to the present embodiment will be described with reference to FIG. 5. FIG. 5 is a flowchart showing a flow of the level evolution mode by the motion measurement method according to the present embodiment.

The processing of the level evolution mode is started when, for example, the operator of the first motion measurement device 10 passes the performed level-up test and selects "Yes" to display a "You did it!" selection screen on the display unit 16.

As shown in FIG. 5, in step S501, the level evolution unit 20 of the first motion measurement device 10 acquires a current degree of evolution after the level-up.

In step S502, the first motion measurement device 10 saves the acquired current degree of evolution in a storage unit such as a database, and ends the processing of the level evolution mode.

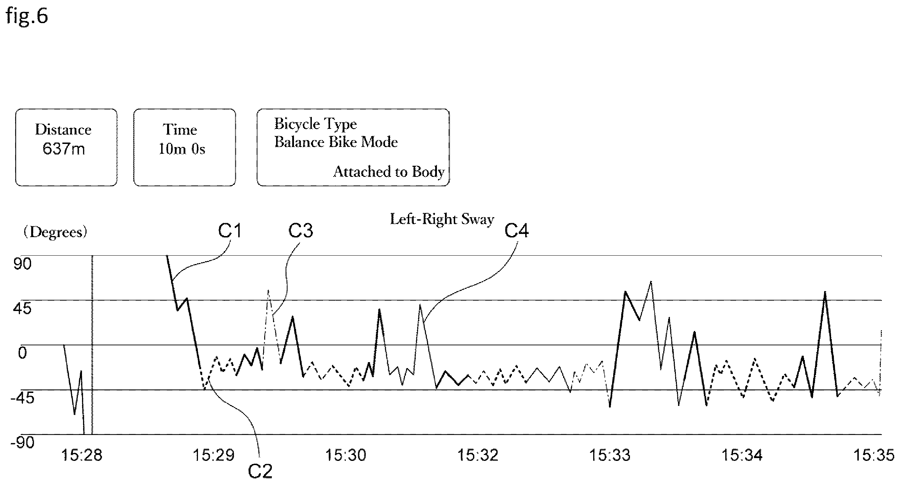

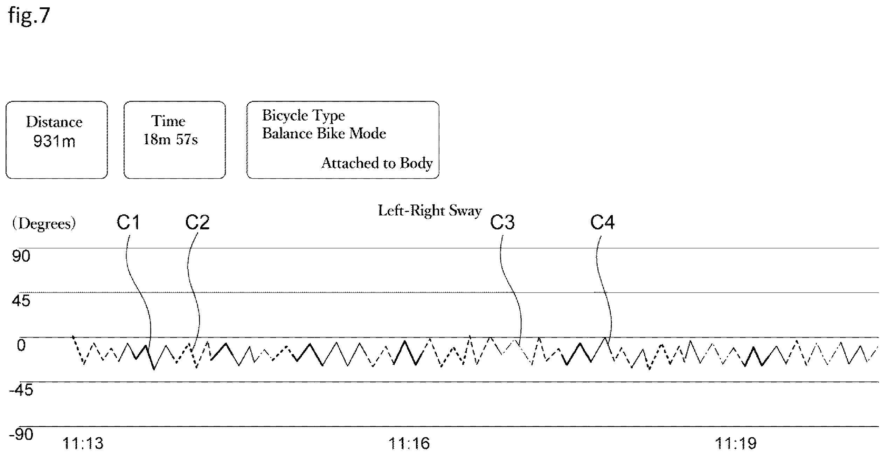

<6. Display Example of Motion measurement device> Next, an example of a display screen by the display unit 16 of the first motion measurement device 10 according to the present embodiment will be described with reference to FIG. 6 and FIG. 7. FIG. 6 and FIG. 7 are schematic diagrams showing an example of a display screen by the display unit of the first motion measurement device 10.

The display unit 16 of the first motion measurement device 10 displays a relationship between the speed of the practice bicycle, which is a traveling body, and the tilt angle of the practice bicycle in a display mode that differs depending on the speed of the practice bicycle or the tilt angle of the traveling body. In FIG. 6 and FIG. 7, display is made by a thick line C1, a dotted line C2, a dashed-dotted line C3, and a solid line C4 depending on the speed of the practice bicycle. As an example, the relationship between the speed of the practice bicycle and the display mode is set as the thick line C1 (slowest), the solid line C4, the dashed-dotted line C3, and the dotted line C2 (fastest) in order of increasing speed. Note that the different display mode is not limited to being distinguished by the shape of the line of the graph as in FIG. 6 and FIG. 7, but may also be displayed by color coding, shading, or the like depending on the speed of the traveling body.

FIG. 6 shows, as an example, a graph representing a state when a child A, who is at an initial stage of bicycle driving, traveled 637 m in 10 minutes and 0 seconds on a practice bicycle to which pedals are not attached. The horizontal axis of the graph represents time during traveling, and the vertical axis of the graph represents a tilt angle of the practice bicycle in the left-right direction. As an example, a positive value on the vertical axis represents a tilt to the right, and a negative value represents a tilt to the left.

As shown in FIG. 6, it may be seen that at the thick line C1 and the solid line C4 where the speed of the practice bicycle is slow, swaying and wobbling in the left-right direction are large, so it is necessary to further perform driving practice when the speed is slow. Also, at the dashed-dotted line C3 and the dotted line C2 where the speed of the practice bicycle is relatively fast, although swaying in the left-right direction is small overall, paying particular attention to the dashed-dotted line C3, there are places where swaying becomes large occasionally. When checking the shape of the course and the situation of the terrain at the traveling point where the swaying became large, this makes it possible to investigate causes such as, for example, the point being a sharp curve or having an inclination such as an uphill slope, for each traveling point and traveling time.

In this way, since the display unit 16 of the first motion measurement device 10 displays the relationship between the speed of the practice bicycle and the tilt angle of the practice bicycle in a display mode that differs depending on the speed of the practice bicycle or the tilt angle of the traveling body, by visualizing the relationship between the speed and the swaying in the left-right direction, it becomes easier to discover points for improvement for improving driving skills in detail.

FIG. 7 shows, as an example, a graph representing a state when a child B, who is at a stage where bicycle driving practice is progressing, traveled 931 m in 18 minutes and 57 seconds on a practice bicycle to which pedals are not attached. The horizontal axis of the graph represents time during traveling, and the vertical axis of the graph represents a tilt angle of the practice bicycle in the left-right direction. As an example, a positive value on the vertical axis represents a tilt to the right, and a negative value represents a tilt to the left.

The display unit 16 of the first motion measurement device 10 displays the relationship between the speed of the practice bicycle, which is a traveling body, and the tilt angle of the practice bicycle in a display mode that differs depending on the speed of the practice bicycle or the tilt angle of the traveling body. In FIG. 6 (Note: The original text refers to FIG. 6, likely explaining the legend common to both figures), display is made by a thick line C1, a dotted line C2, a dashed-dotted line C3, and a solid line C4 depending on the speed of the practice bicycle. As an example, the relationship between the speed of the practice bicycle and the display mode is set as the thick line C1 (slowest), the solid line C4, the dashed-dotted line C3, and the dotted line C2 (fastest) in order of increasing speed.

As shown in FIG. 7, since the child B is progressing in bicycle driving practice, it may be seen that swaying and wobbling in the left-right direction are suppressed generally within 40 degrees even at the thick line C1 and the solid line C4 where the speed of the practice bicycle is slow, or at the dashed-dotted line C3 and the dotted line C2 where the speed of the practice bicycle is relatively fast. Therefore, for the child B whose bicycle driving skills are improving, it is possible to advise advancing the level evolution of driving skills by performing the level-up test shown in FIG. 4 so that the child may ride a bicycle with pedals.

According to the exercise measuring system 1 according to the present embodiment, since the relationship between the speed of the traveling body such as a practice bicycle and the tilt angle of the traveling body is displayed in a display mode that differs depending on the speed of the traveling body or the tilt angle of the traveling body, it is possible to clearly grasp what kind of traveling state is present at which time point. Thereby, points to be improved become clear, and it is possible to promote improvement in traveling skills of a driving beginner or the like. By quantifying the growth of the child, the parent may also view the growth of the child objectively, and may realize the growth. There may be a function to compare numerical values with, for example, those of one month ago.

### <Second Embodiment>

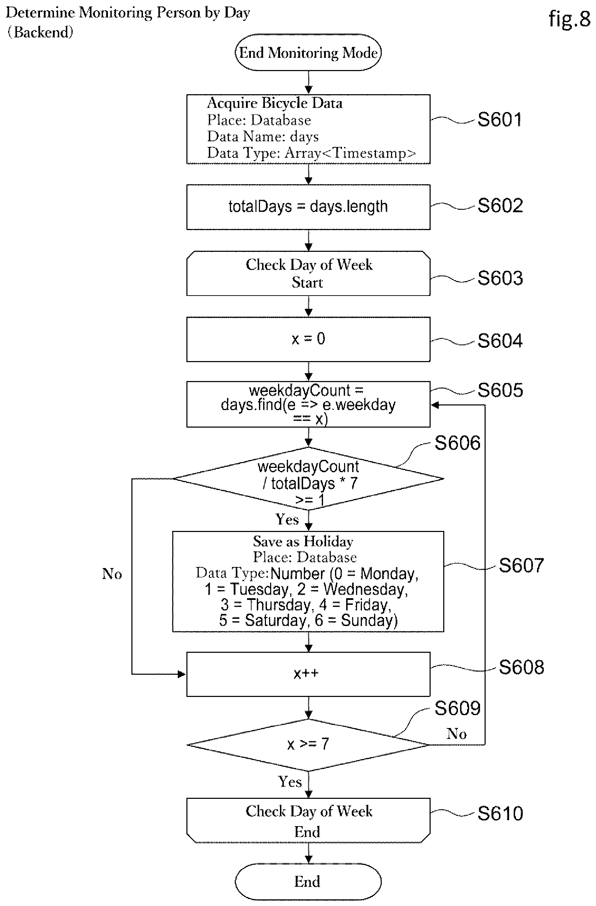

Next, a second embodiment of the present invention will be described with reference to FIG. 8. In the present embodiment, as an example, processing for determining a person in charge such as a guardian who watches over a traveling situation of a child driving a practice bicycle for each day of the week will be described. FIG. 8 is a flowchart showing a flow of processing for determining (backend) a monitoring person for each day of the week by a motion measurement method according to the present embodiment.

The processing for determining a monitoring person for each day of the week is started by, for example, performing a monitoring person determination operation on a smartphone for a guardian, which is the second motion measurement device 40, after the monitoring mode ends.

As shown in FIG. 8, in step S601, the second motion measurement device 40 acquires data of the practice bicycle to be monitored, and stores the data in a storage unit such as a database with, for example, a data name "days" and a data type "Array".

In step S602, the monitoring person setting unit 24 of the second motion measurement device 40 sets the total number of days to 7 days, which is one week. For example, it sets "totalDays = days.length".

In step S603, the monitoring person (guardian) who is the user of the second motion measurement device 40 confirms the day of the week to perform monitoring and starts the monitoring mode.

In step S604, the monitoring person setting unit 24 of the second motion measurement device 40 inputs, for example, "X = 0".

In step S605, the monitoring person setting unit 24 of the second motion measurement device 40 inputs, for example, "weekdayCount = days.find(e => e.weekday == X)".

In step S606, the monitoring person setting unit 24 of the second motion measurement device 40 determines whether or not, for example, "weekdayCount / totalDays * 7 >= 1". If "Yes", the process proceeds to step S607. If "No", the process proceeds to step S608.

In step S607, the monitoring person setting unit 24 of the second motion measurement device 40 saves the corresponding day of the week as a monitoring holiday in a database or the like. As an example, the data type is saved as "Number (0 = Monday, 1 = Tuesday, 2 = Wednesday, 3 = Thursday, 4 = Friday, 5 = Saturday, 6 = Sunday)".

In step S608, the monitoring person setting unit 24 of the second motion measurement device 40 inputs an increment of X (X++).

In step S609, the monitoring person setting unit 24 of the second motion measurement device 40 determines whether or not, for example, "X >= 7". If "Yes", the process proceeds to step S610. If "No", the process returns to step S605.

In step S610, the monitoring person setting unit 24 of the second motion measurement device 40 confirms the day of the week in charge of monitoring, ends the monitoring mode, and ends the processing for determining the monitoring person for each day of the week.

According to the exercise measuring system according to the present embodiment, in addition to the same effects as the exercise measuring system 1 according to the first embodiment, a guardian or the like may confirm the day of the week for which they are in charge of monitoring.

### <Third Embodiment>

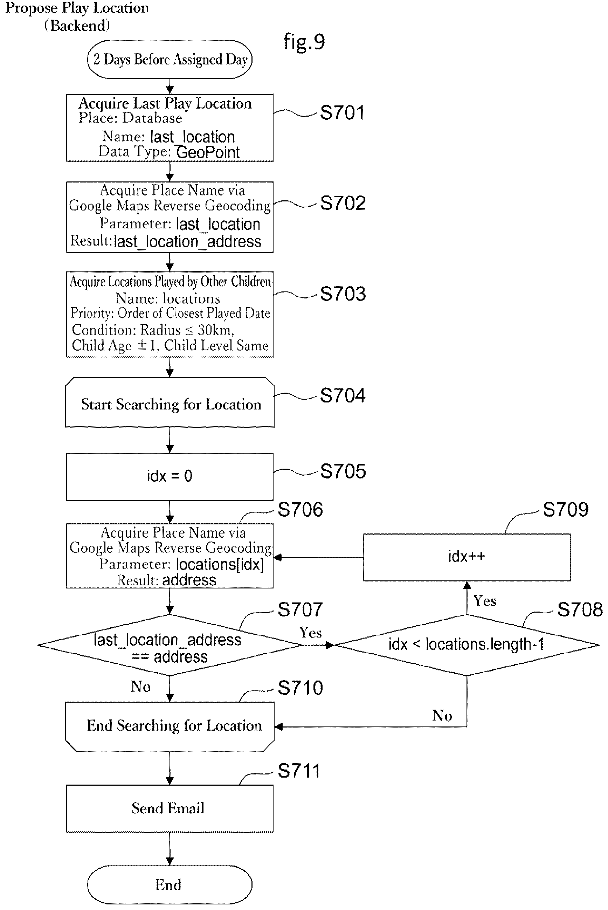

Next, a third embodiment of the present invention will be described with reference to FIG. 9. In the present embodiment, as an example, processing for proposing a play location for a child driving a practice bicycle will be described. FIG. 9 is a flowchart showing a flow of processing for proposing (backend) a play location by a motion measurement method according to the present embodiment.

The processing for proposing a play location is started by, for example, performing a play location proposal operation on the smartphone for a guardian, which is the second motion measurement device 40, before the day responsible for monitoring the child (such as two days before the responsible day).

As shown in FIG. 9, in step S701, the second motion measurement device 40 acquires the last location played before starting this processing, and stores it in a storage unit such as a database with, for example, a data name "last_location" and a data type "GeoPoint".

In step S702, the second motion measurement device 40 stores a place name acquired by the user (guardian) using, for example, Reverse Geocoding of Google Maps, in a storage unit such as a database as a parameter "last_location" and a result "last_location_address".

In step S703, the second motion measurement device 40 acquires locations where other children, different from the child monitored by the user, have played, and stores them in a storage unit such as a database. For example, they are saved with the name "locations", priority "order of closest played date", and conditions "radius within 30 km, child's age +/- 1 year, child's driving level is the same". Under such conditions, neighboring children with similar driving levels are extracted.

In step S704, the travel location proposing unit 25 of the second motion measurement device 40 starts processing to search for a play location to propose.

In step S705, the travel location proposing unit 25 of the second motion measurement device 40 inputs, for example, "idx = 0".

In step S706, the second motion measurement device 40 acquires a place name to propose from, for example, Reverse Geocoding of Google Maps, and stores it in a storage unit such as a database as a parameter "locations[idx]" and a result "address".

In step S707, the travel location proposing unit 25 of the second motion measurement device 40 determines whether or not, for example, "last_location_address == address". If "Yes", the process proceeds to step S708. If "No", the process proceeds to step S710.

In step S708, the travel location proposing unit 25 of the second motion measurement device 40 determines whether or not, for example, "idx < locations.length - 1". If "Yes", the process proceeds to step S709. If "No", the process returns to step S710.

In step S709, the travel location proposing unit 25 of the second motion measurement device 40 inputs, for example, an increment of idx (idx++), and returns to step S706.

In step S710, the travel location proposing unit 25 of the second motion measurement device 40 ends the processing to search for a play location to propose.

In step S711, the travel location proposing unit 25 of the second motion measurement device 40 transmits information on the proposed play location to the second motion measurement device 40 in charge of monitoring by email via the communication unit 11, and ends the processing for proposing a play location.

According to the exercise measuring system according to the present embodiment, in addition to the same effects as the exercise measuring system 1 according to the first embodiment, appropriate play locations may be extracted and proposed from information of neighboring children of the same level using an SNS function according to the current driving skill level of the child.

### <Fourth Embodiment>

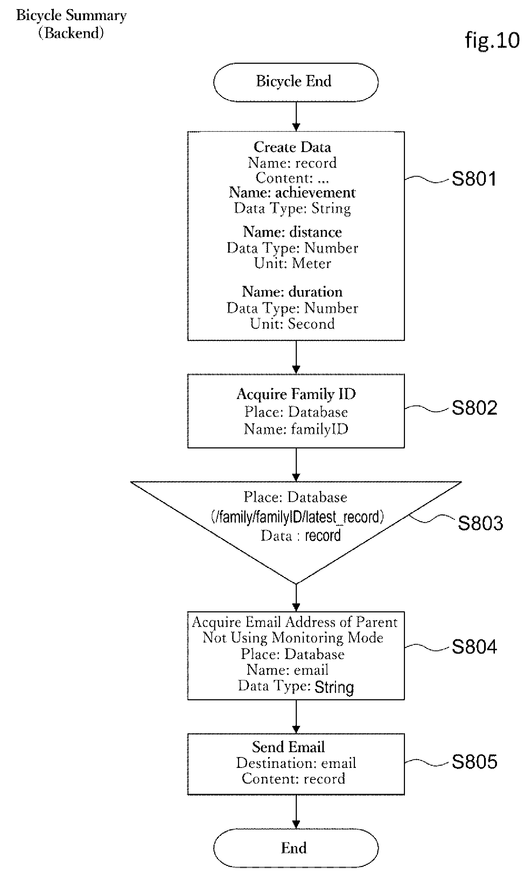

Next, a fourth embodiment of the present invention will be described with reference to FIG. 10. In the present embodiment, as an example, processing for providing a guardian or the like with a summary of a day when a child drove and traveled on a practice bicycle will be described. FIG. 10 is a flowchart showing a flow of processing for providing a summary (backend) of bicycle traveling by a motion measurement method according to the present embodiment.

The processing for providing a summary of bicycle traveling is started by, for example, performing an operation to provide a summary of bicycle traveling on the smartphone for a guardian, which is the second motion measurement device 40, after the traveling of the practice bicycle ends.

As shown in FIG. 10, in step S801, the travel result creating unit 26 of the second motion measurement device 40 creates summary data of a result of the child traveling on the practice bicycle as, for example, "record". The content of the data is stored in a storage unit such as a database as, for example, (1. Name "achievement", Data type "String"), (2. Name "distance", Data type "Number", Unit "meter"), and (3. Name "duration", Data type "Number", Unit "second").

In step S802, the second motion measurement device 40 acquires a family ID of the child who traveled on the practice bicycle and their guardian or the like as a name "familyID".

In step S803, the travel result creating unit 26 of the second motion measurement device 40 saves the acquired family ID in a storage unit such as a database (/family/familyID/latest_record). For example, it saves the data name as "record".

In step S804, the travel result creating unit 26 of the second motion measurement device 40 acquires, from the database, an email address of a guardian who is not using the monitoring mode. For example, it acquires it as a name "email" and a data type "String".

In step S805, the travel result creating unit 26 of the second motion measurement device 40 transmits summary information of the travel result by email via the communication unit 11 to a terminal of a guardian who is not using the monitoring mode, and ends the processing for providing a summary of bicycle traveling. For example, it transmits with the destination as "email" and the content as "String".

According to the exercise measuring system according to the present embodiment, in addition to the same effects as the exercise measuring system 1 according to the first embodiment, it is possible to provide a summary of the child's bicycle traveling to a guardian who is not in charge of monitoring, and it is possible to keep a growth record of the child and support the child's growth.

### <Fifth Embodiment>

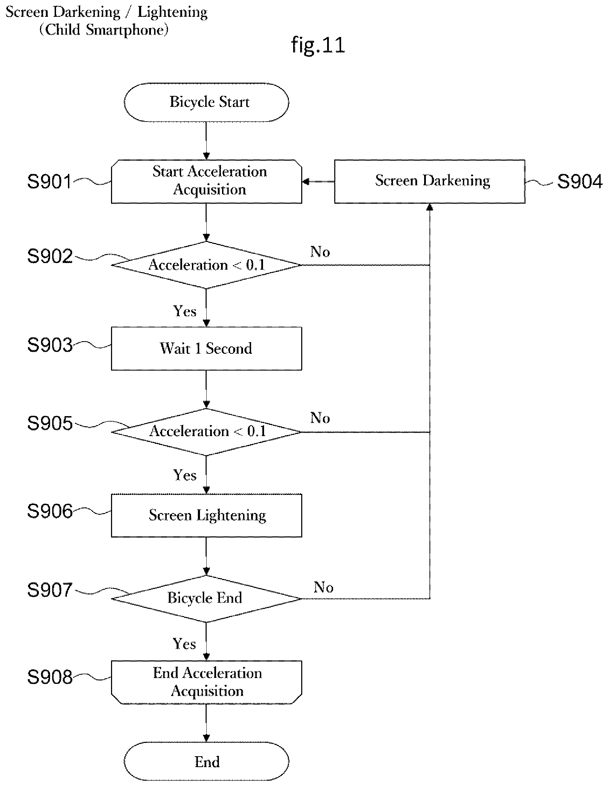

Next, a fifth embodiment of the present invention will be described with reference to FIG. 11. In the present embodiment, as an example, processing for darkening or lightening a display screen of a smartphone for a child attached to a practice bicycle will be described. FIG. 11 is a flowchart showing a flow of processing for darkening or lightening a display screen by a motion measurement method according to the present embodiment.

The processing for darkening or lightening the display screen is started by, for example, performing an operation of the traveling mode of the practice bicycle while the display screen of the smartphone for a child, which is the first motion measurement device 10, is bright. Note that the processing for darkening or lightening the display screen may be performed either when the practice bicycle is traveling or when it is not traveling.

As shown in FIG. 11, in step S901, the blackout processing unit 17 of the first motion measurement device 10 starts acquiring acceleration of the practice bicycle that has started traveling.

In step S902, the blackout processing unit 17 determines whether or not the acquired acceleration is smaller than 0.1 km/s2. If "Yes", the process proceeds to step S903. If "No", the process proceeds to step S904.

In step S903, the blackout processing unit 17 waits for processing for a predetermined time (for example, 1 second) during which the acceleration of the practice bicycle changes.

In step S904, since the acceleration of the practice bicycle has become large, the blackout processing unit 17 darkens the display screen of the display unit 16 of the first motion measurement device 10.

In step S905, the blackout processing unit 17 determines whether or not the acquired acceleration is smaller than 0.1 km/s2, similarly to step S902. If "Yes", the process proceeds to step S906. If "No", the process proceeds to step S904.

In step S906, since it is determined that the acceleration is small and traveling is not being performed, the blackout processing unit 17 lightens the display screen of the display unit 16 of the first motion measurement device 10, or keeps it bright.

In step S907, the blackout processing unit 17 determines whether or not to end the traveling mode of the practice bicycle. That is, it allows the user to select whether or not to end. If "Yes", the process proceeds to step S908. If "No", the process proceeds to step S904.

In step S908, the blackout processing unit 17 ends the acquisition of the acceleration of the traveling practice bicycle, and ends the processing for darkening or lightening the display screen.

According to the exercise measuring system according to the present embodiment, in addition to the same effects as the exercise measuring system 1 according to the first embodiment, it is possible to prevent the child who is the rider from being hindered in practice by looking at the display screen of the smartphone for a child during traveling of the practice bicycle.

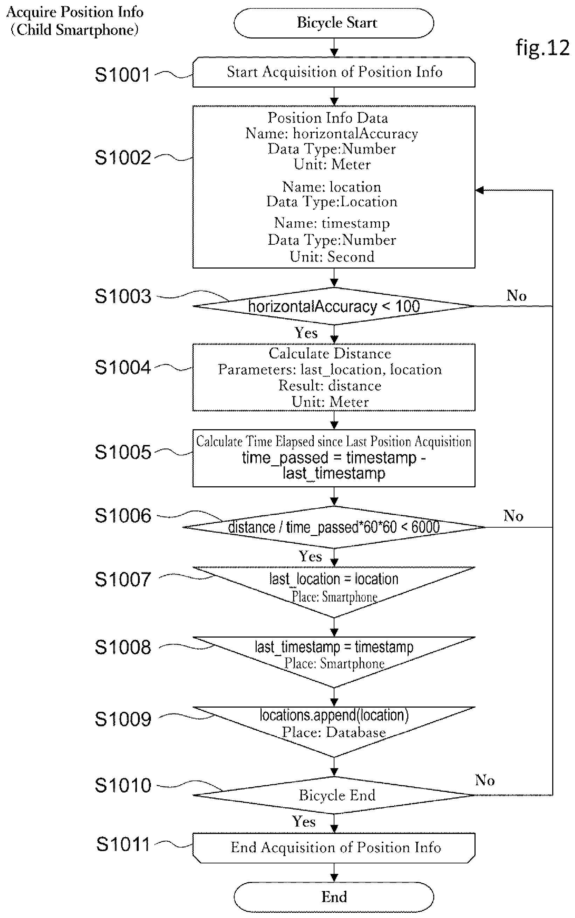

<Sixth Embodiment> Next, a sixth embodiment of the present invention will be described with reference to FIG. 12.

In the present embodiment, as an example, processing for acquiring position information of a traveling practice bicycle will be described. FIG. 12 is a flowchart showing a flow of processing for acquiring position information by a motion measurement method according to the present embodiment.

The processing for acquiring position information is started by, for example, performing an operation of the traveling mode of the practice bicycle on the smartphone for a child, which is the first motion measurement device 10.

As shown in FIG. 12, in step S1001, the processing unit 11 of the first motion measurement device 10 starts acquiring position information of the practice bicycle that has started traveling.

In step S1002, the processing unit 11 of the first motion measurement device 10 acquires position information data of the practice bicycle. For example, it saves the data in a storage unit such as a database as (1. Name "horizontalAccuracy", Data type "Number", Unit "meter"), (2. Name "location", Data type "Location"), and (3. Name "timestamp", Data type "Number", Unit "second").

In step S1003, the processing unit 11 of the first motion measurement device 10 determines whether or not, for example, "horizontalAccuracy < 100". If "Yes", the process proceeds to step S1004. If "No", the process returns to step S1002.

In step S1004, the processing unit 11 of the first motion measurement device 10 calculates a distance traveled on the practice bicycle. For example, it calculates with parameters "last_location, location", result "distance", and unit "meter".

In step S1005, the processing unit 11 of the first motion measurement device 10 calculates an elapsed time from when the position information was last acquired. For example, it calculates as "time_passed = timestamp - last_timestamp".

In step S1006, the processing unit 11 of the first motion measurement device 10 determines whether or not, for example, "distance / time_passed * 60 * 60 < 6000". If "Yes", the process proceeds to step S1007. If "No", the process returns to step S1002.

In step S1007, the processing unit 11 of the first motion measurement device 10 causes the storage unit to store, for example, "last_location = location".

In step S1008, the processing unit 11 of the first motion measurement device 10 causes the storage unit to store, for example, "last_timestamp = timestamp".

In step S1009, the processing unit 11 of the first motion measurement device 10 inputs, for example, "locations.append(location)" and saves it in a storage unit such as a database.

In step S1010, the processing unit 11 of the first motion measurement device 10 determines whether or not to end the traveling mode of the practice bicycle. If "Yes", the process proceeds to step S1011. If "No", the process returns to step S1002.

In step S1011, the processing unit 11 of the first motion measurement device 10 ends the acquisition of position information, and ends the processing for acquiring position information of the traveling practice bicycle.

According to the exercise measuring system according to the present embodiment, in addition to the same effects as the exercise measuring system 1 according to the first embodiment, since the current position of the practice bicycle driven by the child may be confirmed, the guardian may grasp the traveling position of the practice bicycle even when in a remote location.

### <Seventh Embodiment>

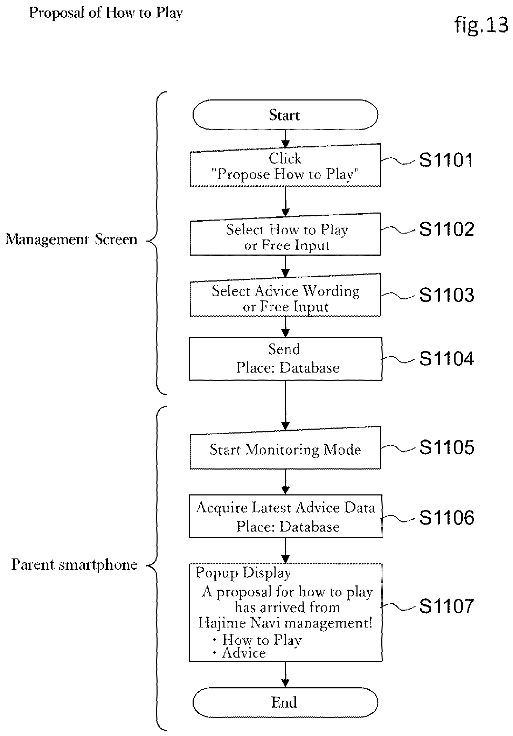

Next, a seventh embodiment of the present invention will be described with reference to FIG. 13. In the present embodiment, as an example, processing for proposing a traveling method (how to play) of a practice bicycle will be described. FIG. 13 is a flowchart showing a flow of processing for proposing a traveling method by a motion measurement method according to the present embodiment.

The processing for proposing a traveling method is started by, for example, performing an operation for a traveling method (how to play) of the practice bicycle on the smartphone for a guardian, which is the second motion measurement device 40.

As shown in FIG. 13, in step S1101, the guardian who is the operator of the second motion measurement device 40 clicks an icon or the like for "Propose how to play" on the display screen.

In step S1102, the operator of the second motion measurement device 40 selects an item for how to play or inputs how to play freely.

In step S1103, the operator of the second motion measurement device 40 selects an item for advice wording or inputs advice freely.

In step S1104, the second motion measurement device 40 saves the information input by the operator in a storage unit such as a database.

In step S1105, the operator of the second motion measurement device 40 starts the monitoring mode.

In step S1106, the travel method proposing unit 27 of the second motion measurement device 40 acquires the latest advice data from the database.

In step S1107, the travel method proposing unit 27 of the second motion measurement device 40 pop-up displays the proposed content such as how to play and advice via the display unit 16, and ends the processing for proposing a traveling method. For example, it displays the proposed content after pop-up displaying "A proposal for how to play has arrived from Hajime Navi management!".

According to the exercise measuring system according to the present embodiment, in addition to the same effects as the exercise measuring system 1 according to the first embodiment, it is possible to acquire a proposal for a traveling method and how to play suitable for the driving skills of the child. By sending a video from the terminal of the person in charge of monitoring to the terminal of the other guardian, both parents may watch over the growth of the child, and it is possible to increase the joy of the family while reducing the labor of the parents.

### [Description of Signs]

10, 40 Motion measurement device
11 Processing unit
12 Communication unit
13 Operation unit
14 Speed measuring unit
15 Tilt angle measuring unit
16 Display unit
   17 Blackout processing unit
   18 Tilt angle determination unit
19 Tilt count determination unit
20 Level evolution unit
21 Travel speed measuring unit
22 Travel speed determination unit
23 Video shooting unit
24 Monitoring person setting unit
25 Travel location proposing unit
26 Travel result creating unit
27 Travel method proposing unit

## Claims

1. A motion measurement device comprising:
a speed measuring unit configured to acquire a travel distance and a travel time of a traveling body to measure a speed of the traveling body;
a tilt angle measuring unit configured to measure a tilt angle of the traveling body tilted in a left-right direction with respect to a traveling direction of the traveling body; and
a display unit configured to display a relationship between the speed of the traveling body and the tilt angle of the traveling body in a display mode that differs depending on the speed of the traveling body or the tilt angle of the traveling body.

2. The motion measurement device according to claim 1, wherein the different display mode displays one of the speed of the traveling body and the tilt angle of the traveling body as a line graph, and displays the other as a color or a shade of the line graph.

3. The motion measurement device according to claim 1, wherein the different display mode displays the tilt angle of the traveling body as a line graph, and displays the speed of the traveling body as a color or a shade of the line graph.

4. The motion measurement device according to claim 1, further comprising: a blackout processing unit configured to darken a screen of the display unit when the traveling body reaches a predetermined speed.

5. The motion measurement device according to claim 1, further comprising:
a tilt angle determination unit configured to determine that the traveling body has tilted at a predetermined angle in one direction of the left-right direction, and to determine that the traveling body has tilted at a predetermined angle in the other direction opposite to the one direction within a certain time after tilting in the one direction;
a tilt count determination unit configured to determine that the number of times the traveling body has tilted in the one direction or the other direction is equal to or less than a threshold; and
a level evolution unit configured to advance a driving level of the traveling body by one step when it is determined that the number of times the traveling body has tilted in the one direction or the other direction is equal to or less than the threshold.

6. The motion measurement device according to claim 1, further comprising:
a travel speed measuring unit configured to measure a travel speed of the traveling body; and
a travel speed determination unit configured to determine that the travel speed of the traveling body is equal to or higher than a predetermined speed, and to determine that the speed of the traveling body has become zero within a certain time when the traveling body is traveling at the predetermined speed or higher, wherein the level evolution unit advances the driving level of the traveling body by one step when it is determined that the speed of the traveling body has become zero within the certain time.

7. The motion measurement device according to claim 1, further comprising: a video shooting unit configured to start video shooting of a rider of the traveling body.

8. The motion measurement device according to claim 1, further comprising: a monitoring person setting unit configured to set a monitoring person for a rider of the traveling body according to a day of the week.

9. The motion measurement device according to claim 1, further comprising: a travel location proposing unit configured to compare information of a rider of the traveling body with information of an age of another person driving another traveling body, a travel location, a travel date, and a distance from a current location recorded in a database via a network, and to propose a location to travel based on information highly approximate to the information of the rider.

10. The motion measurement device according to claim 1, further comprising: a travel result creating unit configured to create a travel result of a day traveled by the traveling body, and to cause the display unit to display the created travel result.

11. The motion measurement device according to claim 1, further comprising: a travel method proposing unit configured to propose a travel method of the traveling body according to a degree of evolution of the driving level.

12. A motion measurement device comprising:
a parent device including:
a speed measuring unit configured to acquire a travel distance and a travel time of a traveling body to measure a speed of the traveling body;
a tilt angle measuring unit configured to measure a tilt angle of the traveling body tilted in a left-right direction with respect to a traveling direction of the traveling body; and
a display unit configured to display a relationship between the speed of the traveling body and the tilt angle of the traveling body in a display mode that differs depending on the speed of the traveling body or the tilt angle of the traveling body; and
a child device having a communication unit configured to transmit and receive information to and from the parent device.

13. A motion measurement method comprising:
acquiring a travel distance and a travel time of a traveling body and measuring a speed of the traveling body;
measuring a tilt angle of the traveling body tilted in a left-right direction with respect to a traveling direction of the traveling body; and
displaying a relationship between the speed of the traveling body and the tilt angle of the traveling body in a display mode that differs depending on the speed of the traveling body or the tilt angle of the traveling body.

14. A motion measurement program causing a computer to execute:
a step of acquiring a travel distance and a travel time of a traveling body to measure a speed of the traveling body;
a step of measuring a tilt angle of the traveling body inclined in a left-right direction with respect to a traveling direction of the traveling body; and
a step of displaying a relationship between the speed of the traveling body and the tilt angle of the traveling body in a display mode that differs according to the speed of the traveling body or the tilt angle of the traveling body.
